Europäisches Patentamt

European Patent Office

Office européen des brevets

(19)

(11) Veröffentlichungsnummer : **0 167 997**
**B1**

(12) **EUROPÄISCHE PATENTSCHRIFT**

(45) Veröffentlichungstag der Patentschrift :
03.01.90

(21) Anmeldenummer : 85108321.2

(22) Anmeldetag : 05.07.85

(51) Int. Cl.⁵ : **C 08 K 13/06**, C 08 L 77/00,
H 01 B  1/20 // (C08K13/06,
9:06, 3:04, 3:34)

(54) Leitfähige Polyamidformmassen.

(30) Priorität : 12.07.84 DE 3425628

(43) Veröffentlichungstag der Anmeldung :
15.01.86 Patentblatt 86/03

(45) Bekanntmachung des Hinweises auf die Patenterteilung : 03.01.90 Patentblatt 90/01

(84) Benannte Vertragsstaaten :
BE CH DE FR GB IT LI NL

(56) Entgegenhaltungen :
EP-A- 0 028 391
FR-A- 2 195 654

(73) Patentinhaber : BASF Aktiengesellschaft
Carl-Bosch-Strasse 38
D-6700 Ludwigshafen (DE)

(72) Erfinder : Steinberger, Rolf, Dr.
Am Moenchhof 47
D-6707 Schifferstadt (DE)
Erfinder : Schlag, Johannes, Dr.
Leuschnerstrasse 36
D-6700 Ludwigshafen (DE)
Erfinder : Schlichting, Karl, Dr.
Virchowstrasse 12
D-6712 Bobenheim-Roxheim (DE)
Erfinder : Seiler, Erhard, Dr.
Erpolzheimer Strasse 1
D-6700 Ludwigshafen (DE)
Erfinder : von Tomkewitsch, Sibylle
Ascheringer Weg 4
D-8134 Poecking (DE)
Erfinder : Schmidt, Hans-Friedrich, Dr.
Graf-Trattenbach-Weg 3
D-8196 Eurasburg (DE)

**Beschreibung**

Gegenstand der Erfindung sind leitfähige Polyamidformmassen, die silikatische Füllstoffe und Leitfähigkeitsruß enthalten.

Kunststoffe, wie thermoplastische Polyamide, sind in Folge ihres hohen spezifischen elektrischen Widerstandes Isolatoren. Für viele Anwendungsbereiche ist diese Eigenschaft von großem Nachteil, da die durch Reibung elektrostatisch erzeugten Oberflächenladungen auf dem jeweiligen Gegenstand verbleiben und zu mannigfachen Störungen Anlaß geben, z. B. von den relativ harmlosen Aufladungen beim Begehen von Teppichen bis hin zur Zerstörung von Informationen auf magnetischen Datenträgern oder Explosionsgefahr bei Anwesenheit von zündfähigen Gemischen.

Es besteht jedoch die Möglichkeit, durch Zusatz von elektrisch leitenden Substanzen, wie Metallpulvern oder Leitfähigkeitsruß, diesen Mangel zu beheben. Insbesondere bei Verwendung von Leitfähigkeitsruß kann durch Variation der Konzentration ein weiter Bereich des spezifischen elektrischen Widerstandes eingestellt werden, wie aus « Kunststoffberater », Band 22, 1977, Seiten 262 bis 265 bekannt ist.

Andererseits werden durch derartige Zusätze die übrigen Eigenschaften der Kunststoffe, z. B. die hervorragende Schlagzähigkeit des Polyamids, gravierend beeinträchtigt und damit viele, durch die verbesserte Leitfähigkeit mögliche Anwendungsgebiete verschlossen. Aus der DE-OS 19 65 434 und der EP-Patentschrift 23 635 sind Polyamidformmassen bekannt, die mit Organosilanen beschichtete mineralische Füllstoffe enthalten, um deren Wärmeformbeständigkeit zu verbessern und ein isotropes Schwindungs- und Verzugsverhalten zu erreichen. Im Hinblick auf die DE-OS 19 65 434, Seite 2, war jedoch davon auszugehen, daß durch solche Zusätze die nachteilige Wirkung von Ruß nicht aufgehoben wird.

Es war deshalb die technische Aufgabe gestellt, Polyamidformmassen mit guter elektrischer Leitfähigkeit und rascher Entladung der Oberfläche zur Verfügung zu stellen, die sich durch gute mechanische Eigenschaften, insbesondere hohe Schlagzähigkeit, auszeichnen.

Diese Aufgabe wird gelöst durch leitfähige Polyamidformmassen, enthaltend

A) 29 bis 76 Gew.% mindestens eines linearen thermoplastischen Polyamids,
B) 20 bis 50 Gew.% mindestens eines silikatischen Füllstoffes,
C) 4 bis 6 Gew.% Leitfähigkeitsruß und gegebenenfalls
D) 0 bis 15 Gew.% übliche Zusatzstoffe in wirksamen Mengen,

wobei sich die Gewichtsprozente jeweils auf 100 ergänzen, dadurch gekennzeichnet, daß sie als Komponente B feinteiliges calciniertes Kaolin und/oder feinteiliges Calciummetasilikat, die mit Organosilanen als Kupplungsmittel beschichtet sind, und als Komponente C Leitfähigkeitsruß mit einer spezifischen Oberfläche BET > 900 m²/g und einer DBP-Absorption von > 300 ml/100 g enthalten.

Die neuen Formmassen haben den Vorteil, daß sie eine gute elektrische Leitfähigkeit aufweisen und insbesondere die elektrische Oberflächenladung rasch abgeführt wird. Darüberhinaus haben die neuen Formmassen den Vorteil, daß die mechanischen Werte des Polyamids weitgehend erhalten bleiben. Insbesondere haben die neuen Formmassen eine gute Schlagzähigkeit, die eine breite Verwendung ermöglicht.

Die neuen Formmassen sind insofern bemerkenswert, als davon auszugehen war, daß der Zusatz von mineralischen Füllstoffen die nachteiligen Wirkungen der Rußbeimischung nicht beeinflussen. Entsprechend der DE-OS 19 65 434, Seite 2, Absatz 1, werden nämlich Füllstoffe wie Ruß und silikatische Füllmittel wie Ton in ihrer schädigenden Wirkung auf die Schlagzähigkeit des Polyamids gleichgesetzt. Darüberhinaus ist aus « Fillers for plastics », London, Iliffe Books, 1971, Seite 33, bekannt, daß der Zusatz von Calciummetasilikat, Nylon verbesserte elektrische Isoliereigenschaften verleiht. Es erschien deshalb nicht angezeigt, Wollastonit als Füllmittel mitzuverwenden, da eine Verminderung der elektrischen Leitfähigkeit zu erwarten war.

Die verwendeten linearen thermoplastischen Polyamide (Komponente A) sind bevorzugt gesättigte lineare Polyamide mit einem K-Wert (gemessen nach Fikentscher, Cellulosechemie, Band 13, 1932, Seite 58, in 1 gew.%iger Lösung in konzentrierter Schwefelsäure) von 60 bis 80. Geeignete Polyamide sind beispielsweise Polycaprolactam (Polyamid-6), Polyhexamethylenadipinsäureamid (Polyamid-6,6), Polyhexamethylensebacinsäureamid, Polylaurinlactam, Polyundecanamid, ferner Homo- und Copolyamide die unter Verwendung von Adipinsäure, Azelainsäure, Sebacinsäure, Dodecandisäure, Terephthalsäure einerseits und Hexamethylendiamin, Trimethylhexamethylendiamin, Bis-(4-aminocyclohexyl)-methan, 2,2-Bis-(4'-aminocyclohexyl)-propan andererseits hergestellt werden, sowie Copolyamide, die durch Kondensation von Lactamen zusammen mit den oben genannten Dicarbonsäuren und Diaminen erhalten werden. Gut geeignet sind auch Mischungen der oben angeführten Homopolyamide. Besondere Bedeutung haben Polyamid-6 und Polyamid-6,6 erlangt. Die erfindungsgemäßen Formmassen enthalten 29 bis 76 Gew.%, insbesondere 44 bis 71 Gew.% Polyamid.

Als Komponente B enthalten die erfindungsgemäßen Formmassen 20 bis 50 Gew.%, insbesondere 25 bis 35 Gew.%, calciniertes Kaolin und/oder Calciummetasilikat, die mit Organosilanen als Kupplungsmittel beschichtet sind.

Vorzugsweise verwendet man calciniertes Kaolin mit einem Al₂O₃-Gehalt von 44 bis 45 Gew.% und einem SiO₂-Gehalt von 52 bis 54 Gew.%, das vorteilhaft durch thermische Behandlung der natürlich vorkommenden Aluminiumsilikate Kaolin oder Kaolinit bei Temperaturen von 800 bis 1 300 °C erhältlich ist. Vorteilhaft hat das feinteilige calcinierte Kaolin eine Teilchengröße von 0,01 bis 10 $\mu$m, insbesondere von 0,05 bis 3 $\mu$m, sowie vorzugsweise eine spezifische Oberfläche BET > 6 m²/g, vorzugsweise von 10 bis 20 m²/g.

Ein anderer, als Komponente B geeigneter silikatischer Füllstoff ist Calciummetasilikat (Wollastonit). Die Korngröße des Calciummetasilikats beträgt vorteilhaft von 0,01 bis 30 $\mu$m, insbesondere von 0,5 bis 20 $\mu$m. Besonders geeignet ist nadelförmiges Calciummetasilikat mit einem Teilchendurchmesser von 0,01 bis 15 $\mu$m und einer Teilchenlänge von 2 bis 90 $\mu$m.

Die erfindungsgemäßen silikatischen Füllstoffe können einzeln oder in Mischung miteinander angewandt werden.

Die erfindungsgemäßen Füllstoffe, calciniertes Kaolin und Calciummetasilikat sind mit Organosilanen als Kupplungsmittel beschichtet. Vorteilhaft enthalten sie eine Menge von 0,1 bis 3 Gew.%, insbesondere 0,5 bis 2 Gew.%, an Silanen, bezogen auf die Menge des Füllstoffes. Organosilane, die zur Beschichtung geeignet sind, werden beispielsweise in der DE-OS 19 65 434 beschrieben. Besonders gut geeignet sind Aminoalkyldialkoxysilane, z. B. $\gamma$-Aminopropyltriethoxysilan.

Als Komponente C verwendet man Leitfähigkeitsruße mit einer spezifischen Oberfläche nach BET > 900 m²/g, insbesondere 950 bis 1 500 m²/g sowie großen Porenvolumina, charakterisiert durch DBP-Werte > 300 ml/100 g, insbesondere 300 bis 500 ml/100 g. Die DBP-Kennzahl wird entsprechend DIN 53 601 gemessen. Die erfindungsgemäßen Formmassen enthalten Leitfähigkeitsruß in einer Menge von 4 bis 6 Gew.%.

Die erfindungsgemäßen Formmassen können noch übliche Zusatzstoffe und Hilfsmittel (Komponente D) in einer Menge von 0 bis 15 Gew.% enthalten. Es versteht sich, daß die angegebenen Gewichtsprozente für die Komponenten A bis D sich jeweils auf 100 ergänzen. Geeignete Zusatzstoffe und Hilfsmittel sind UV-Hitze und Hydrolysestabilisatoren auf Phenol-, Amin- oder Kupferbasis, ferner Schmier-, Gleit- und Trennmittel, Farbpigmente und Flammschutzmittel.

Besonders bevorzugt wird die Stabilisierung mit Salzen des einwertigen Kupfers. Als Salze des einwertigen Kupfers kommen vorzugsweise Kupfer (I)-Acetat, Kupfer (I)-Chlorid, -Bromid oder -Jodid in Frage. Sie sind vorteilhaft in Mengen von 5 bis 500 ppm Kupfer, vorzugsweise 10 bis 250 ppm Kupfer, bezogen auf das Polyamid, enthalten. Besonders vorteilhaft ist es, wenn das Kupfer in molekularer Verteilung im Polyamid vorliegt. Dies wird erreicht, wenn man der Formmasse ein Konzentrat zusetzt das Polyamid, ein Salz des einwertigen Kupfers und ein Alkalihalogenid oder Erdalkalihalogenid in Form einer festen homogenen Lösung enthält. Ein typisches Konzentrat besteht z. B. aus 79 bis 95 Gew.% Polyamid und 21 bis 5 Gew.% eines Gemisches aus Kupferjodid oder -bromid und Kaliumjodid oder Kalciumbromid.

Unter Zusatzstoffen (Komponente D) seien auch zähigkeitsverbessernde Stoffe, wie vernetzte oder unvernetzte kautschukartige Polymerisate, verstanden. Vorteilhaft verwendet man unvernetzte ternäre Copolymerisate aus

a) 52 bis 79,5 Gew.% Ethylen,

b) 20 bis 40 Gew.% zumindest eines primären oder sekundären $C_2$-$C_8$-Alkylesters der (Meth)acrylsäure und

c) 0,5 bis 8 Gew.% eines säurefunktionellen oder latent säurefunktionellen Monomeren,

wobei die Summe der Komponenten a) bis c) 100 Gew.% beträgt. Geeignete Copolymerisate werden beispielsweise beschrieben in DE-OS 32 20 380.

Andere bevorzugte zähigkeitsverbessernde Stoffe (D) sind durch Emulsionspolymerisation hergestellte, zumindestens teilweise vernetzte, in einer im wesentlichen durch die Emulsionspolymerisation vorgegebene Teilchengrößenverteilung kautschukelastische Polymerisate mit einer Teilchengröße unter 2 $\mu$m. Derartige kautschukartige Polymerisate erhält man beispielsweise durch Polymerisation einer Emulsion von geeigneten Monomeren, wie Butadien, Isopren, höheren Alkylestern der Acrylsäure oder Methacrylsäure, gegebenenfalls unter Mitverwendung von bis zu 30 Gew.% an Monomeren und die bei der Polymerisation harte Polymerisate liefern, wie Styrol, Acrylnitril, Methylacrylat, Methylmethacrylat oder Vinylmethylether. Üblicherweise werden als kautschukelastische Polymerisate verwendet Polybutadien, Butadien-Styrol-Copolymere mit einem Styrolgehalt von weniger als 30 Gew.%, Butadien-(Meth)acrylester-Copolymere sowie (Meth)-acrylesterhomopolymere mit gegebenenfalls geringen Mengen an vernetzend wirkenden Monomeren. Besonders bevorzugt sind kautschukelastische Poly-(meth)acrylate wie Poly-n-butylacrylat, Polyhexylacrylat, Poly-2-ethylhexylacrylat, die gegebenenfalls geringe Mengen, etwa 0,1 bis 6 Gew.%, eines Monomeren mit Carbonsäuregruppen, Carbonsäure liefernden Gruppen oder Carbonsäureamid-Gruppen einpolymerisiert enthalten, z. B. (Meth)acrylsäure, t-Butylacrylat, Fumarsäure, Acrylamid oder Methacrylamid. Ein Anteil von 1 bis 10 Gew.% dieser Monomeren, zumindest in der Oberflächenhülle der Polymerisatteilchen, bewirkt eine verbesserte Haftung an der Polyamid-Matrix. Geeignete Polymerisate werden beispielsweise beschrieben in EP 82020.

Vorteilhaft verwendet man die vorgenannten zähigkeitsverbessernden Zusätze in Mengen von 2 bis 15 Gew.%, insbesondere von 5 bis 10 Gew.%, bezogen auf die Formmasse.

Die erfindungsgemäßen leitfähigen Formmassen haben vorteilhaft eine Schlagzähigkeit nach DIN 53 453 von 40 bis 100 KJ/M² und einen elektrischen Oberflächenwiderstand $R_{OB}$ nach DIN 53 482 von $10^7$ bis $10^{11}$ Ω · cm.

Die Herstellung der erfindungsgemäßen Formmassen erfolgt auf den einschlägig bekannten Vorrichtungen zur Herstellung gefüllter Thermoplaste, wie Einwellen- oder Zweiwellen-Extrudern oder Schneckenknetern. In der Regel geht man hierbei von Polyamidgranulat aus, das bei Temperaturen von 250 bis 310 °C aufgeschmolzen wird. Der beschichtete silikatische Füllstoff wird zweckmäßig an der gleichen Stelle zudosiert wie das Polyamidgranulat. An dieser Stelle können auch andere Zusatzstoffe, wie Kupferstabilisator oder zähigkeitsverbessernde Mittel, zugegeben werden. Der Leitfähigkeitsruß wird bevorzugt an einer Stelle des Extruders zugegeben, an der die übrigen Komponenten der Mischung bereits als homogene Schmelze vorliegen.

Eine bevorzugte Verfahrensweise besteht darin, daß man in einem ersten Schritt alle Mischungskomponenten außer dem Leitfähigkeitsruß homogen auf einem Extruder vermischt, extrudiert und granuliert und anschließend das so erhaltene Granulat in einem zweiten Schritt wieder aufschmilzt und mit Leitfähigkeitsruß mischt. Diese Verfahrensweise erlaubt eine besonders exakte Einstellung der Rußkonzentration und eine besonders homogene Mischung aller Komponenten.

Die erfindungsgemäßen Formmassen eignen sich zur Herstellung von Formteilen durch Spritzguß oder Extrusion.

Die Erfindung sei an folgenden Beispielen veranschaulicht. Die in den Beispielen genannten Prozente sind Gewichtsprozente.

### Beispiele 1 bis 10

Auf einem Zweischneckenextruder (Typ ZSK der Fa. Werner & Pfleiderer) wurden Polyamid-6 vom K-Wert 72, ein Kupfer(I)-Jodid/Kaliumjodid-Stabilisatorkonzentrat auf Basis Polyamid-6, silanisierter Wollastonit mit einer mittleren Teilchengröße von 10 μm und gegebenenfalls auch ein unvernetztes ternäres Ethylencopolymerisat bei Temperaturen von 250 bis 300 °C aufgeschmolzen, homogen miteinander vermischt, in Strangform extrudiert, abgekühlt, granuliert und getrocknet.

Das so erhaltene Granulat wurde erneut auf einem Zweischneckenextruder aufgeschmolzen und Leitfähigkeitsruß mit einer spezifischen Oberfläche BET von 1 000 m²/g und einer DBP-Absorption von 400 ml/100 g eingetragen, homogen eingemischt und wie oben beschrieben zu Granulat verarbeitet.

Aus dem Granulat wurden Prüfkörper bei einer Temperatur von 280 °C spritzgegossen und die Schlagzähigkeit nach DIN 53 453 bestimmt. Darüberhinaus wurden Rundscheiben (60 × 2 mm) spritzgegossen und in der Mittelzone der Scheibe der Oberflächenwiderstandswert $R_{OB}$ nach DIN 53 482 bestimmt.

Zur weiteren Charakterisierung der Leitfähigkeit wurde das Entladungsverhalten dieser Rundscheiben bestimmt. Zu diesem Zweck wurden die Rundscheiben in einem entsprechend konstruierten Plattenkondensator auf 2 000 V aufgeladen und der Spannungsabfall des Kondensators bei Erdung in Abhängigkeit von der Zeit mit Hilfe eines statischen Voltmeters verfolgt. Die Rundscheibe bildet bei dieser Anordnung das Dielektrikum des Kondensators. Leitfähige Proben bewirken einen weitgehenden Ladungsabfluß (Restladung ≤ 100 V) in einer Zeitspanne ≤ 100 Millisekunden. Alle Prüfungen wurden an spritzfrischen Prüfkörpern durchgeführt.

Aus nachfolgender Tabelle sind Einzelheiten, wie die Zusammensetzung der Formmassen sowie deren Eigenschaften zu entnehmen.

(Siehe Tabelle Seite 5 f.)

## Tabelle

| Beispiel Nr. | Polyamid-6 [1] [Gew.%] | Wollastonit [Gew.%] | Ethylenco-polymerisat [2] [Gew.%] | Leitfähig-keitsruß [Gew.%] | Schlagzähig-keit $a_n$ [kJ/m$^2$] | Oberflächen-widerstand $R_{OB}$ [$\Omega \cdot cm$] | Restladung nach 100 msec [V] |
|---|---|---|---|---|---|---|---|
| **1. Nicht erfindungsgemäße Formmassen** | | | | | | | |
| 1 | 98 | – | – | 2 | 115 | $1.10^{13}$ | 1100 |
| 2 | 96 | – | – | 4 | 81 | $8.10^{12}$ | 1000 |
| 3 | 95 | – | – | 5 | 55 | $5.10^{12}$ | 1000 |
| 4 | 94 | – | – | 6 | 39 | $5.10^{11}$ | 700 |
| 5 | 92 | – | – | 8 | 28 | $3.10^{6}$ | 0 |
| 6 | 68 | 30 | – | 2 | 101 | $5.10^{12}$ | 1100 > |
| **2. Erfindungsgemäße Formmassen** | | | | | | | |
| 7 | 66 | 30 | – | 4 | 85 | $1.10^{11}$ | 100 |
| 8 | 65 | 30 | – | 5 | 72 | $8.10^{7}$ | 30 |
| 9 | 64 | 30 | – | 6 | 56 | $3.10^{6}$ | 0 |
| 10 | 55 | 30 | 10 | 5 | 95 | $3.10^{7}$ | 0 |

[1] Polyamid-6 mit 1 % CuJ/KJ-Stabilisatorkonzentrat, entsprechend 40 ppm Cu

[2] Copolymerisat aus 65 Gew.% Ethylen, 30 Gew.% n-Butylacrylat, 5 Gew.% Acrylsäure MFI = 10 g/10 min

**Patentansprüche**

1. Leitfähige Formmassen, enthaltend
   A) 29 bis 76 Gew.% mindestens eines linearen thermoplastischen Polyamids,
   B) 20 bis 50 Gew.% eines silikatischen Füllstoffes,
   C) 4 bis 6 Gew.% Leitfähigkeitsruß und gegebenenfalls
   D) 0 bis 15 Gew.% üblicher Zusatzstoffe

wobei sich die Gewichtsprozente A bis D auf 100 ergänzen, dadurch gekennzeichnet, daß sie als Komponente B feinteiliges calciniertes Kaolin und/oder feinteiliges Calciummetasilikat, die mit Organosilanen als Kupplungsmittel beschichtet sind und als Komponente C Leitfähigkeitsruß mit einer spezifischen Oberfläche nach BET > 900 m²/g und einer DBP-Absorption von > 300 ml/100 g enthalten.

2. Formmassen nach Anspruch 1, dadurch gekennzeichnet, daß sie calciniertes Kaolin mit einer Teilchengröße von 0,01 bis 10 µm und einer spezifischen Oberfläche nach BET > 6 m²/g enthalten.

3. Formmassen nach Anspruch 1, dadurch gekennzeichnet, daß sie Calciummetasilikat mit einer Teilchengröße von 0,01 bis 30 µm enthalten.

4. Formmassen nach Anspruch 1, dadurch gekennzeichnet, daß sie nadelförmiges Calciummetasilikat mit einem Teilchendurchmesser von 0,1 bis 15 µm und einer Teilchenlänge von 2 bis 90 µm enthalten.

5. Formmassen nach Anspruch 1, dadurch gekennzeichnet, daß sie als Komponente (D) 2 bis 15 Gew.% eines unvernetzten, zumindestens ternären Copolymerisates aus
   a) 52 bis 79,5 Gew.% Ethylen,
   b) 20 bis 40 Gew.% mindestens eines primären oder sekundären $C_2$-$C_8$-Alkylesters der (Meth)acrylsäure und
   c) 0,5 bis 8 Gew.% eines säurefunktionellen oder latent säurefunktionellen Monomeren,

wobei die Summe der Komponenten a) bis c) 100 Gew.% beträgt, enthalten.

6. Formmassen nach Anspruch 1, dadurch gekennzeichnet, daß sie 2 bis 15 Gew.% eines durch Emulsionspolymerisation hergestellten, zumindestens teilweise vernetzten, in einer im wesentlichen durch die Emulsionspolymerisation vorgegebenen Teilchengrößenverteilung mit einer Teilchengröße unter 2 µm, kautschukelastischen Polymerisats enthalten.

7. Formmassen nach den Ansprüchen 1 bis 6, dadurch gekennzeichnet, daß sie 5 bis 500 ppm Kupfer(I)-Verbindungen, bezogen auf den Polyamidanteil, in homogener Form enthalten.

**Claims**

1. A conductive molding material containing
   A) from 29 to 76 % by weight of one or more linear thermoplastic polyamides,
   B) from 20 to 50 % by weight of a silicate filler,
   C) from 4 to 6 % by weight of conductivity carbon black and, if required,
   D) from 0 to 15 % by weight of conventional additives in effective amounts, the percentage of A to D summing to 100 containing as component B finely divided calcined kaolin or finely divided calcium metasilicate, which are each coated with an organosilane as coupling agent, and as component C conductivity carbon black having a BET specific surface area > 900 m²/g and a DBP absorption > 300 ml/100 g.

2. A molding material as claimed in claim 1, which contains calcined kaolin having a particle size of from 0.01 to 10 µm and a BET specific surface area > 6 m²/g.

3. A molding material as claimed in claim 1, which contains calcium metasilicate having a particle size of from 0.01 to 30 µm.

4. A molding material as claimed in claim 1, which contains acicular calcium metasilicate having a particle diameter of from 0.1 to 15 µm and a particle length of from 2 to 90 µm.

5. A molding material as claimed in claim 1, which contains as component (D) from 2 to 15 % by weight of a non-crosslinked copolymer containing three or more components which consists of
   a) from 52 to 79.5 % by weight of ethylene,
   b) from 20 to 40 % by weight of one or more primary or secondary $C_2$-$C_8$-alkyl esters of (meth)acrylic acid and
   c) from 0.5 to 8 % by weight of a monomer possessing acidic functional groups or latent acidic functional groups, the components a) to c) summing to 100 % by weight.

6. A molding material as claimed in claim 1, which contains from 2 to 15 % by weight of a partially or completely crosslinked polymer which is prepared by emulsion polymerization and is elastomeric in a particle size distribution with a particle size of less than 2 µm, which is essentially predetermined by the emulsion polymerization.

7. A molding material as claimed in any one of claims 1 to 6, which contains from 5 to 500 ppm, based on the amount of polyamide, of copper (I) compounds in homogeneous form.

**Revendications**

1. Matières à mouler conductrices, contenant
   A) 29 à 76 % en poids d'au moins un polyamide linéaire, thermoplastique,
   B) 20 à 50 % en poids d'une charge silicatée,
   C) 4 à 6 % en poids d'un noir de carbone de conductibilité et, éventuellement,
   D) 0 à 15 % en poids d'additifs usuels
où les pourcentages pondéraux A à D parachèvent 100, caractérisées en ce qu'elles contiennent, à titre de composant B, du métasilicate de calcium finement divisé et/ou du kaolin calciné, finement divisé, qui sont revêtus d'organosilanes à titre d'agents de couplage et, à titre de composant C, du noir de carbone de conductibilité possédant une surface spécifique selon BET supérieure à 900 m²/g et une absorption DBP supérieure à 300 ml/100 g.

2. Matières à mouler suivant la revendication 1, caractérisées en ce qu'elles contiennent du kaolin calciné présentant un calibre des particules de 0,01 à 10 μm et une surface spécifique selon BET supérieure à 6 m²/g.

3. Matières à mouler suivant la revendication 1, caractérisées en ce qu'elles contiennent du métasilicate de calcium présentant un calibre des particules de 0,01 à 30 μm.

4. Matières à mouler suivant la revendication 1, caractérisées en ce qu'elles contiennent du métasilicate de calcium aciculaire possédant un diamètre des particules de 0,1 à 15 μm et une longueur des particules de 2 à 90 μm.

5. Matières à mouler suivant la revendication 1, caractérisées en ce qu'elles contiennent, à titre de composant (D) de 2 à 15 % en poids d'un copolymère non réticulé, au moins ternaire, constitué de
   a) 52 à 79,5 % en poids d'éthylène,
   b) 20 à 40 % en poids d'au moins un ester alkylique en $C_2$ à $C_8$, primaire ou secondaire, de l'acide (méth)acrylique et
   c) 0,5 à 8 % en poids d'un monomère à fonctionnalité acide ou à fonctionnalité acide latente,
où la somme des composants a) à c) atteint 100 % en poids.

6. Matières à mouler suivant la revendication 1, caractérisées en ce qu'elles contiennent de 2 à 15 % en poids d'un polymère préparé par polymérisation en émulsion, au moins partiellement réticulé, en une répartition granulométrique essentiellement déterminée par la polymérisation en émulsion, avec un calibre des particules de 2 μm, le polymère présentant l'élasticité du caoutchouc.

7. Matières à mouler suivant les revendications 1 à 6, caractérisées en ce qu'elles contiennent, par rapport à la fraction polyamide, de 5 à 500 ppm de composés du cuivre-(I), sous forme homogène.